# EUROPEAN PATENT APPLICATION

(11) **EP 4 614 473 A1**
(43) Date of publication of application: **10.09.2025**
(21) Application number: 25159907.2
(22) Date of filing: 25.02.2025
(51) Int. Cl.: G07F 17/32

(54) **SYSTEMS, APPARATUS AND METHODS FOR UTILIZING TITO VOUCHERS TO TRACK AND REWARD UNCARDED CASINO PATRONS**

(30) Priority: 08.03.2024 US 202463562785 P; 14.01.2025 US 202519020129
(71) Applicant: Transact Technologies Incorporated, Hamden, CT 06518 (US)
(72) Inventor: Zizza, Scott, Las Vegas, NV, 89129 (US); Henderson, Mark, Boulder City, NV, 89005 (US); Shakya, Kabir, Las Vegas, NV, 89178 (US)
(74) Representative: Hoeger, Stellrecht & Partner Patentanwälte mbB

(57) **Abstract**

The present invention provides systems, apparatus, and methods that enable a casino to track an uncarded player over multiple sessions and provide rewards based on cumulative play. Game play information for each game play session of a player may be communicated to at least one of a casino management system and a promotional system. At least one of the casino management system and the promotional system may initiate communication of a reward for a player at predetermined thresholds of game play. Reward indicia for the reward may be printed on a voucher printed at the gaming machine. A unique voucher number may be assigned to the voucher, which enables player and game play tracking. The voucher may be generated each time the player qualifies for a reward. The reward can be provided via a QR code on the voucher which drives the player to a website or mobile app.

## Description

This application claims the benefit of commonly owned U.S. provisional patent application no. 63/562,785 filed on March 8, 2024, which is incorporated herein and made a part hereof by reference.

### BACKGROUND OF THE INVENTION

The present invention relates to the field of casino game play. More specifically, the present invention relates to systems, apparatus, and methods for tracking uncarded casino patrons and rewarding such patrons based on the tracking.

In the casino gaming industry, most casino operations employ some method of cashless gaming for gaming transactions. One such method is referred to as TITO (ticket in - ticket out), also referred to as vouchering. With TITO, a voucher is issued to the player at the gaming machine at the conclusion of play with a barcode or other indicia indicating an amount won during the game play session. The voucher can be redeemed for cash or inserted into another gaming machine for continued game play.

Another form of cashless gaming is through the use of player cards that are issued to players upon registration. The cards are inserted into the gaming machine during play and work much the same way as a TITO voucher, providing a record of winnings. However, player cards also enable the casino to track a player's game play over multiple sessions, including game play at multiple machines during one visit and over multiple visits to the casino. This also enables the casino to provide rewards to players after reaching certain thresholds of game play. When registering for a player's card, the player must provide personal identifying information, which the casino can then use to provide targeted rewards under the rewards program. Such advantages are not provided when a player is uncarded.

Casinos are also starting to enable the use of virtual player's cards using, for example, a mobile phone application that enables a smartphone to act as the player card.

Most casino operations employ multiple methods of cashless transactions for gaming transactions and, often, those methods include TITO. There are nearly 1.1 million slot machines in operation throughout the world and the vast majority (~80%) employ some form of cashless gaming using a form of TITO vouchering.

Casino operators go through great lengths to know their patrons (also referred to herein as "players"). Doing so helps casino operators tailor marketing for rewards (goods and services) more specifically for each player. The belief is that providing such rewards increases player patronage and loyalty. Thus, casinos encourage patrons to "sign up" or register for player cards by enticing them with incentives (e.g., rewards for game play, membership in a Player's Club with associated perks, and the like). However, despite the incentives, many patrons never register for a player's card or join the casino's Player's Club. The reasons for this may vary from player to player and casino to casino but there are some common themes. For example, some players simply want to remain (mostly) anonymous while others feel that the incentives are not strong enough to entice them to give up personal information. In other cases, it could simply be because the player finds the process of signing up inconvenient.

The challenge for casino operators is to find new and creative ways to reach the group of their patrons who remain "uncarded".

It would be advantageous to incentivize uncarded casino patrons to register for a player's card and/or to join a player's club, or to otherwise provide personal identifying information to the casino. It would also be advantageous to enable tracking of uncarded players' game play over multiple gaming sessions that utilize the same TITO voucher, in order to provide rewards and to incentivize further game play.

The systems, apparatus, and methods of the present invention provide the foregoing and other advantages.

### SUMMARY OF THE INVENTION

The present invention relates to systems, apparatus, and methods for tracking uncarded casino patrons and rewarding such patrons based on the tracking, in order to incentivize such patrons to register for a casino card and/or join a casino player's club.

In an example embodiment of the present invention, a player identification and tracking system for identifying, tracking and rewarding uncarded players (patrons) utilizing ticket vouchers is provided. Such a system may comprise at least one electronic gaming machine comprising a TITO printer, a casino management system in communication with the electronic gaming machine, and a promotional system in communication with the casino management system. The electronic gaming machine may communicate game play information for each game play session of a player to at least one of the casino management system and the promotional system. A reward for the player may be generated by one of the casino management system and the promotional system at predetermined thresholds of game play. Reward indicia for the reward may be embodied in a voucher printed at the electronic gaming machine, with a unique voucher number assigned to the voucher.

The voucher may be generated each time the player qualifies for the reward.

The unique voucher number may comprise a session fingerprint for a current or just completed game play session.

The electronic gaming machine may further comprise one or more slot machine interface boards (SMIB), enabling communication with at least one of the casino management system and the promotional system.

The unique voucher number may be communicated to at least one of the casino management system and the promotional system. For example, the unique voucher number may be made available to at least one of the casino management system and the promotional system when the player at least one of adds additional game play credits to the electronic gaming machine, ends the game play session by cashing out the game play credits, ends the game play session by playing the game play credits to zero on the electronic gaming machine, initiates a further game play session via the electronic gaming machine or a further electronic gaming machine, and the like.

The game play information may comprise game play session attributes. The game play session attributes may be communicated to at least one of the casino management system and the promotional system in association with the unique voucher number. The game play session attributes may comprise one or more of electronic gaming machine identifier, electronic gaming machine serial number, internal session identifier, timestamp, session start and end times, session duration, location, amount won, amount lost, game identifier, number of games or sessions played, amount wagered, time played per game or session, and the like.

The session fingerprint may comprise at least a portion of the game play session attributes.

The printed voucher may comprise a QR code. The session fingerprint and a URL may be encoded into the QR code. The session fingerprint may act as a proxy for the player and the player's personal identification information for use by at least one of the casino management system and the promotional system for identifying the player.

At least one of the reward indicia or the QR code associated with the reward may be scannable into a player's digital wallet for storage and later use.

In one example embodiment, scanning of the QR code by a player's mobile electronic device renders a website identified by the URL, the website being adapted to extract the session information from the session fingerprint. Based on the session information, the website generates the award for redemption by the player.

A website host for the website may comprise one of the casino management system and the promotional system. The website host may generate a second fingerprint and a unique identifier based on the extracted session data for storage in the form of a cookie. The cookie may be linked to the player's mobile electronic device. The cookie may act as a proxy for the player's personal identification information, enabling further game play sessions to be linked to and associated with the cookie.

The reward may be redeemable upon one of the player providing personal identification information to at least one of the casino management system and the promotional system, and/or the player registering for a casino player card.

In a further example embodiment, scanning of the QR code by a player's mobile electronic device renders a mobile app identified by the URL for downloading onto the player's mobile electronic device. The mobile app, once downloaded, may generate a unique identifier based on extracted session data that acts a proxy for the player's personal identification information, enabling further game play sessions to be linked to and associated with the downloaded mobile app.

Subsequent to the downloading of the mobile app, further session information may be automatically communicated to one of the casino management system and the promotional system. Further rewards may be provided to the player based on the further session information.

The reward indicia for the rewards and the further rewards may be automatically communicated to and stored in the player's digital wallet.

The reward may be redeemable upon one of the player providing personal identification information to at least one of the casino management system and the promotional system, and the player registering for a casino player card.

The QR code or associated reward indicia may be scanned at a redemption location to obtain the reward.

The game play information may be accumulated over multiple game play sessions and/or multiple electronic gaming machines via use of the voucher.

The voucher may be printed at least one of periodically during the game play session based on the predetermined thresholds and at an end of the game play session. The predetermined thresholds may be based on one or more of time of play, amount won, amount lost, game play sessions played, aggregate wagers, type or number of games played, and the like.

The reward may be redeemable on presentation of the voucher at a redemption location. The redemption location may comprise one or more of the casino gaming machine, a restaurant, a hotel, a cash dispenser, an online store, a rental car agency, a retail establishment, a gift shop, a website, and the like.

The reward may comprise one or more of physical gifts from online stores or brick and mortar stores, game play credits for redemption in a casino gaming machine, and discount coupons for meals, hotel stays, travel, events, experiences, or the like.

At least one of the casino management system and the promotional system may collect the game play information from multiple game play sessions of the player over time. The collected game play information may be analyzed to at least one of: provide targeted rewards to the player, provide player incentives for further game play, and encourage the player to register for a casino player card. For example, the session information from multiple game play sessions and players may be analyzed.

The present invention also encompasses methods for identifying, tracking and rewarding uncarded players utilizing ticket vouchers. In one example embodiment, the method may comprise providing at least one electronic gaming machine comprising a TITO printer, and enabling communications between the electronic gaming machine, a casino management system, and a promotional system. Game play information for each game play session of a player may be communicated to at least one of the casino management system and the promotional system. At least one of the casino management system and the promotional system may initiate communication of a reward for a player at predetermined thresholds of game play. Reward indicia for the reward may be printed on a voucher printed at the electronic gaming machine. A unique voucher number may be assigned to the voucher.

The methods may also include elements and features of the system embodiments discussed above.

### BRIEF DESCRIPTION OF THE DRAWINGS

The present invention will hereinafter be described in conjunction with the appended drawing figures, wherein like reference numerals denote like elements, and:
Figure 1 shows a block diagram of an example embodiment of a system for carrying out the present invention;
Figure 2 shows a flow diagram of an example embodiment of the present invention;
Figure 3 shows an example embodiment of a TITO voucher used in accordance with the present invention;
Figure 4 shows an example embodiment of a reward coupon used in accordance with the present invention;
Figure 5 shows a further example embodiment of a TITO voucher used in accordance with the present invention;
Figure 6 shows a flow diagram of a further example embodiment of the present invention;
Figure 7 shows a further example embodiment of a reward coupon used in accordance with the present invention;
Figure 8 shows a flow diagram of a further example embodiment of the present invention; and
Figure 9 shows a flow diagram of a further example embodiment of the present invention.

### DETAILED DESCRIPTION

The ensuing detailed description provides exemplary embodiments only, and is not intended to limit the scope, applicability, or configuration of the invention. Rather, the ensuing detailed description of the exemplary embodiments will provide those skilled in the art with an enabling description for implementing an embodiment of the invention. It should be understood that various changes may be made in the function and arrangement of elements without departing from the spirit and scope of the invention as set forth in the appended claims.

The present invention relates to systems, apparatus, and methods for tracking uncarded casino patrons and rewarding such patrons based on the tracking, in order to incentivize such patrons to register for a casino card and/or join a casino player's club.

The following is nomenclature that will be used throughout the description and drawings of the present invention:
*TITO:* abbreviation for Ticket In - Ticket Out, also referred to as voucher, TITO ticket, TITO voucher, or vouchering.
*Voucher:* A ticket or other paper slip with a unique identifier printed on it used as a fungible intermediary for cash.
*Game play:* the act or activity of playing a casino game such as a slot machine or table game. *Patron:* (also referred to herein as *a player or user*) A customer of the casino who typically engages in game play.
*Carded:* (also known as a carded player/patron). A patron who is identifiable typically by means of a physical or virtual card.
*Uncarded:* (also known as an uncarded player/patron). A player who is NOT identifiable and the casino has no means or method of identifying the player - an anonymous player.
*SAS:* abbreviation for Slot Account System, a proprietary serial communications protocol for gaming machines or slot machines.
*Serial:* A method of sending data byte by byte or sometimes, colloquially meaning RS232 which is a specific type of serial communication protocol using -15v to +15v to transmit data. *Cashless:* The process by which gaming transactions take place without the use of a currency or "cash" using a voucher or card in its place.
*TITO Printer:* A printer that prints a TITO voucher.
*PID:* Personal Identification Information (name, address, phone number social security number, and the like).
*EGM:* Electronic Gaming Device or slot machine.
*Redemption:* The process by which a voucher or TITO ticket is exchanged for currency.
*Bill Accepter:* A device that accepts paper currency (bills) and TITO vouchers for redemption. *Player 's Club:* A colloquial term used to mean the entity or group that players/patrons belong to when they become carded or share their personal demographic information with casinos.
*Session:* The time period that a player or patron spends at a gaming machine while bought in or having credits on the gaming machine.
*Credits or Game Play Credits:* The financial unit EGM's use to track player funds while in session.
*Buy in*/*adding credits:* The act of the player/patron adding funds/credits to the gaming machine.
*Cash out (a*/*k*/*a cashing out):* The act of a player removing any remaining money from the gaming machine.
*Voucher number:* A unique number typically printed in barcode format that associates that physical voucher and ID with money.
*SMIB:* abbreviation for Slot Machine Interface Board. A specialized electronic circuit board used to communicate with the EGM over SAS.
*Query string:* the part of the URL that contains variables or other dynamic information for processing by the web server. Typically in the format: *?name=vale&,* where ? denotes the start of the sequence and the & joins multiple variables together.
*Digital Wallet:* A specialized place of storage on a digital device, typically a smartphone, where a user can store sensitive (typically financial) information that is subsequently encrypted via asymmetric encryption.
*Cookie:* a means, typically a file, stored on a user's device by a webserver that contains pertinent information about the session or user.
*Event relay:* a method, usually a computer software service, which can be used to relay data on premise (across a firewall or security) to computer services running in a cloud environment.
*Mobile tenant & session DB:* a database which holds information about the session and the mobile device that initiated the session. A tenant is a logical owner of data residing on the DD. This can be a reference to mobile device or B2B user such as a casino.
*Realtime event grid*/*firebase:* A real time event grid is MS Azure's implementation of an event fabric (a way to interconnect computer services). Firebase is Google's version of an event fabric.
*EC*/ *Epicentral*: a promotional rewards system provided by TransAct Technologies, Inc. *Redis*/*DB:* Redis is an in memory database or datastore.
*REST* (representational state transfer): a paradigm of constraints/architecture for publishing or exposing Remote API's for a computer service (application program interface) via a network - typically HTTP (hypertext transfer protocol) over TCP/IP over a computer network (such as the internet).
*REST call:* the act of computer client invoking a published REST API.

The present invention proposes solutions that will help casino operators gain insight and reward their uncarded patrons. The proposed solutions leverage the ubiquitous existence of TITO and TITO printers within casino floor operations. It is well known that, in general, the TITO printers are only in use during "cash out", typically at the end of a player's session. In most cases, in the middle of a player's session, the TITO printer remains idle. Accordingly, the TITO printer process remains an ideal and underutilized method for communicating with players during a session.

When a player cashes out or prints their TITO voucher at the end of their game play session, a unique voucher number is generated (or was previously generated and cached). This unique number is made available via the SAS and thus to any third party interfaces connected to the EGM's SAS port. This provides third party SMIBs a method to "see" the player's voucher number. The present invention leverages this information, utilizing this voucher number as session fingerprint which can be processed and stored for purposes of analytics.

The casino management system, a promotional system for providing rewards, or a third party system, can communicate with the EGM using a corresponding SMIB. Multiple SMIBs can be physically installed in a gaming machine. For example, the casino may install an SMIB into the gaming machine to enable communications between the EGM and the casino management system. In addition, a third party (such as a third party provider of a promotional rewards system (e.g., the Epicentral system provided by TransAct Technologies, Inc., assignee of the present invention) may also install a dedicated SMIB in the EGM, enabling communications with the third party system. SMIBs enable communications via SAS (or other serial communication protocols).

When a player adds credits or buys in (via a TITO voucher) the voucher number is again made available via SAS to any third party SMIB that is connected. With the present invention, it is possible for a third-party solution to infer additional session data or game play attributes about any player (e.g., via the SMIB connected to the EGM's SAS port). This information can be siphoned off the EGM's SAS interface for processing and storing in conjunction with the voucher number if the player cashes out as described above.

With the present invention, combining session attributes along with the voucher number allows a third-party solution to identify and reward a patron, in session, if the player uses that same voucher to "buy in" or add credits at another casino game or in other sessions at any time in the future. Following this pattern an operator can follow and reward a player indefinitely over multiple gaming sessions until the chain is broken - i.e. the player plays off their credits, or never cashes out or buys in using a previously known TITO voucher.

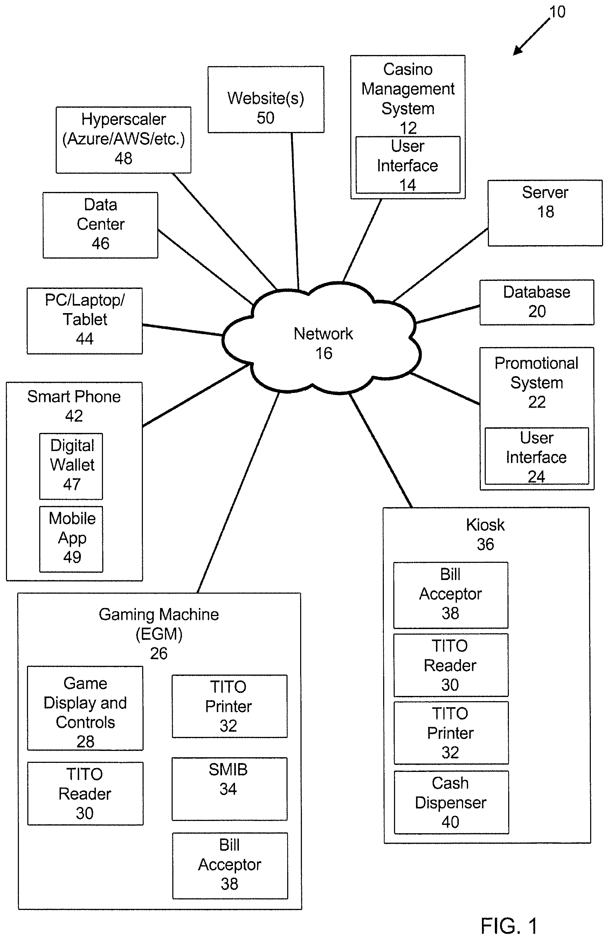

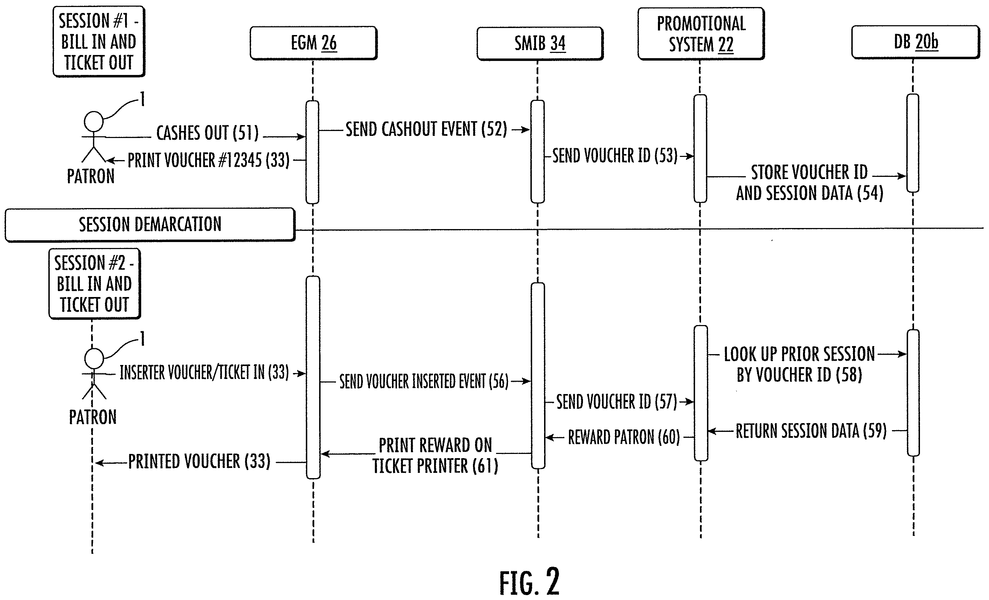

Figure 1 is a block diagram of an example embodiment of a system 10 for implementing the process flows shown in Figures 2, 6, 8, and 9 discussed below. A casino management system 12 with a user interface 14 is connected to a network 16 (which may comprise one or more of a VPN, a LAN, a WAN, an EPN, a SAN, the Internet, or the like). A server 18 and database 20 are also connected to the network 16 for facilitating communications over the network between the casino management system 12 and other components of the system 10. A promotional system 22 with user interface 24 is also connected to the network 16 for receiving game play information from the casino management system 12 and providing player rewards as discussed in detail below. The promotional system 22 may access database 20 and/or a further database separate from that of the casino management system 12.

It should be appreciated that the server 18 and database 20 in Figure 1 may take many forms and be comprised of various hardware elements and/or software modules. Separate servers 18 and databases 20 may be provided for each of the casino management system 12 and the promotional system 22. For example, the casino management system 12 and the promotional system 22 may each be comprised of a dedicated server and database integral to or in communication with the corresponding system.

Multiple EGMs 26 are connected to the network 16. Each EGM 26 may be comprised of typical game display and controls 28, a TITO reader 30 for reading an inserted voucher, a TITO printer 32 for printing a TITO voucher, a bill acceptor 38, and one or more SMIBs 34. The EGMs 26 are connected to the network 16 and in communication with the casino management system 12 and the promotional system 22 as described above. The system also includes a kiosk 36 with a bill acceptor 38 for accepting cash from a player and a TITO printer 32 for printing a voucher for the corresponding cash amount. The kiosk 36 may also include a TITO reader 30 for reading a TITO voucher for redemption as well as a cash dispenser 40 for dispensing cash in accordance with the redeemed voucher. Personal player devices such as a smartphone 42 and/or PC/Tablet/Laptop 44 may also be connected to the network 16, enabling communication with a rewards website or mobile app as discussed in detail below upon scanning of a barcode or a QR code on a voucher. Casino personnel may also utilize smartphones 42 and or a PC/tablet/laptop 44 on the casino floor to provide promotional rewards to players at specific EGMs 26 and/or to communicate with the casino management system 12 or promotional system 22. The system 10 may also include a data center 46 and/or a hyperscaler 48 (such as Azure, AWS, or the like) enabling a player to interact with a cloud-based service and reach various websites 50, for example for reward redemption purposes.

Figure 2 shows a flow diagram of an example embodiment of the present invention. In session # 1, the player 1 initiates game play at the casino by inserting cash into the bill acceptor of the EGM 26 (Bill In). Alternatively, game play can be initiated by any form of cashless payment (e.g., AFT, EFT, credit card, TITO voucher, payment via electronic smartphone wallet 47, or the like). At the conclusion of the gaming session, the player 1 cashes out (51), at which stage the EGM 26 registers a cash out event (52) and prints a TITO voucher 33 from the TITO printer 32. The TITO voucher 33 can then be redeemed by the player 1 or used by the player 1 in further game play sessions whether at the same EGM 26 or different EGMs 26. The EGM 26 notifies the SMIB 34 of the cash out event (52) and provides the voucher ID and associated session data. The SMIB 34 then provides (53) the voucher ID and associated session data to a promotional system 22 (such as a rewards program system) which then stores (54) the voucher ID and associated session data in a database 20b.

If the player 1 chooses to start a new gaming session (session # 2) using the same TITO voucher 33, the EGM 26 will recognize that a voucher has been inserted and indicate this event (56) to the SMIB 34 and provide the voucher ID. This voucher ID will be passed on (57) from the SMIB 34 to the promotional system 22, where the voucher ID can be used to look up prior session information (58). This information can be used by the promotional system 22 to reward the player 1 at the appropriate juncture (at certain thresholds or at the conclusion of the session). The reward information can be communicated (59, 60) from the promotional system 22 back to the SMIB 34, which in turn can initiate printing (61) of reward indicia on a voucher 33 at the EGM 26.

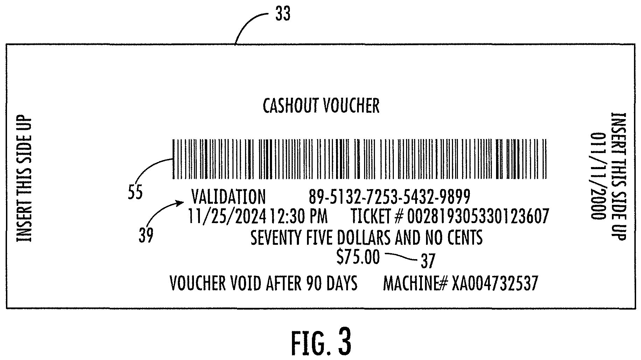

Figure 3 shows an example of a TITO voucher 33 used in accordance with the embodiment of Figure 2 described above. As shown in Figure 3, the voucher 33 may be a standard TITO voucher, also referred to as a "cashout voucher". The reward indicia may comprise a monetary amount 37 indicated on the voucher 33. For example, the monetary amount 37 may comprise the player's winnings plus an award amount, or the award amount alone. Alternatively, the reward indicia may be embodied in the barcode 55 or in another format, such as a separate image or text printed on the voucher 33. The unique voucher number 39 assigned to the voucher may comprise the voucher validation number as shown in Figure 3. The unique voucher number 39 may comprise a session fingerprint for a current or a just completed game play session.

The unique voucher number 39 may be made available to at least one of the casino management system 12 and the promotional system 22 when the player at least one of adds additional game play credits to the electronic gaming machine 26, ends the game play session by cashing out the game play credits, ends the game play session by playing the game play credits to zero on the electronic gaming machine 26, initiates a further game play session via the electronic gaming machine 26 or a further electronic gaming machine, and the like. The voucher 33 may be generated each time the player 1 qualifies for a reward.

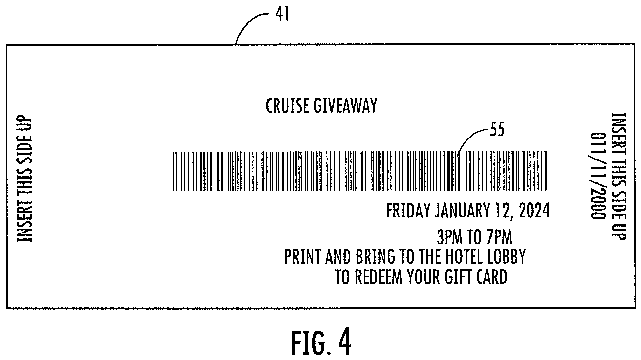

Rather than providing reward indicia on a standard TITO voucher 33, the reward may also be presented in the form of a coupon 41 as shown in Figure 4. The coupon 41 may be printed at the EGM 26 at the conclusion of game play or at any predefined threshold of game play.

The reward may be redeemable on presentation of the voucher 33 or coupon 41 at a redemption location. The redemption location may comprise one or more of the casino gaming machine 26, a restaurant, a hotel, a cash dispenser 40, an online store (e.g., via public website 50), a rental car agency, a retail establishment, a gift shop, a website 50, and the like. The reward may comprise one or more of physical gifts from online stores or brick and mortar stores, game play credits for redemption in a casino gaming machine 26, and discount coupons for meals, hotel stays, travel, events, experiences, or the like.

In a further example embodiment of the present invention, for uncarded players it is possible to produce a printed slip or voucher 33 via the TITO printer 32 that would encode unique game play session attributes of that player's session. These unique elements include but are not limited to the EGM identifier, an internal session identifier, timestamp, session start and end times, session duration, location, EGM serial number, amount won, amount lost, game identifier, number of games or sessions played, amount wagered, time played per game or session, and the like. This information (or a portion thereof), when collated, can represent a fingerprint of that player's session. The game play session attributes can be encoded into the barcode 55 on the voucher 33, or encoded into a QR code printed on the voucher, as discussed in detail below.

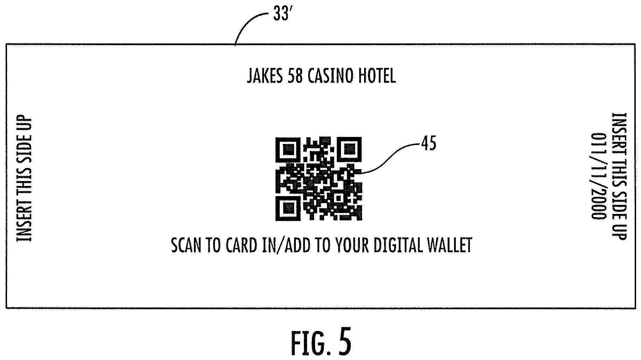

For example, as shown in Figure 5, a voucher/ticket/slip 33' can be dispensed via the TITO Printer 32 with a unique fingerprint and a URL encoded into a QR code 45. This printed voucher 33' can then be scanned and interpreted by any smartphone 42 or device with a camera capable of reading QR codes 45. Upon scanning of the QR code 45 by the player's smartphone 42, the player 1 is then directed to a website 50 with the fingerprint information (one or more of the game play session attributes) embedded within the URL via query string attributes. The website 50 may be a public website or a website hosted by the casino (via the casino management system 12) or by the promotional system 22.

It should be appreciated that a voucher 33, 33'can be printed when the player 1 cashes out, at periodic periods during a game play session, or when the credits on the EGM 26 equal a set minimum, thus ensuring a voucher 33, 33' is printed even for a non-winning game play session. In this way, both winning and losing players can be tracked.

With the session information encoded within the URL, that information can be extracted for storage and processing by the website 50. However, it is important to note that the session information does not contain any PID information. The only information it will contain is non personal identifying information about the session - a fingerprint.

When the player 1 arrives at the website 50 and the session data is extracted, a second fingerprint and unique ID is generated for storage in the form of a cookie. This allows the printed and previously encoded session data to be linked with the cookie and the player's smartphone 42. This solution does require the allowance of cookies. The newly added cookie will then act as a proxy for the player's PID or other identifying information and upon subsequent visits future sessions can be associated with that cookie's data - i.e. fingerprint and unique ID.

The website 50 can then present the player 1 with an award or awards based on the game play information. Such rewards may comprise physical gifts that can be claimed from various stores (either online stores or physical locations, inside or outside of the casino). The rewards may also comprise credits for further game play, discounts on meals or hotel stays at or near the casino, and the like. In order to claim the rewards, the player 1 may be required to provide personal identification information and/or demographic information (for example, this may include signing up for a player's card or player's club membership).

The second option is for the casino management system 12 to provide in-session pointing (e.g., printing of a voucher with the QR code periodically during the session) that the player 1 can scan and save rewards into the player's anonymous digital wallet 47 via the website 50 - embedded into the cookie along with the fingerprint, at any time. This further detethers the player 1 from the EGM 26 and allows them to scan the rewards at some time post session so as not to interrupt game play.

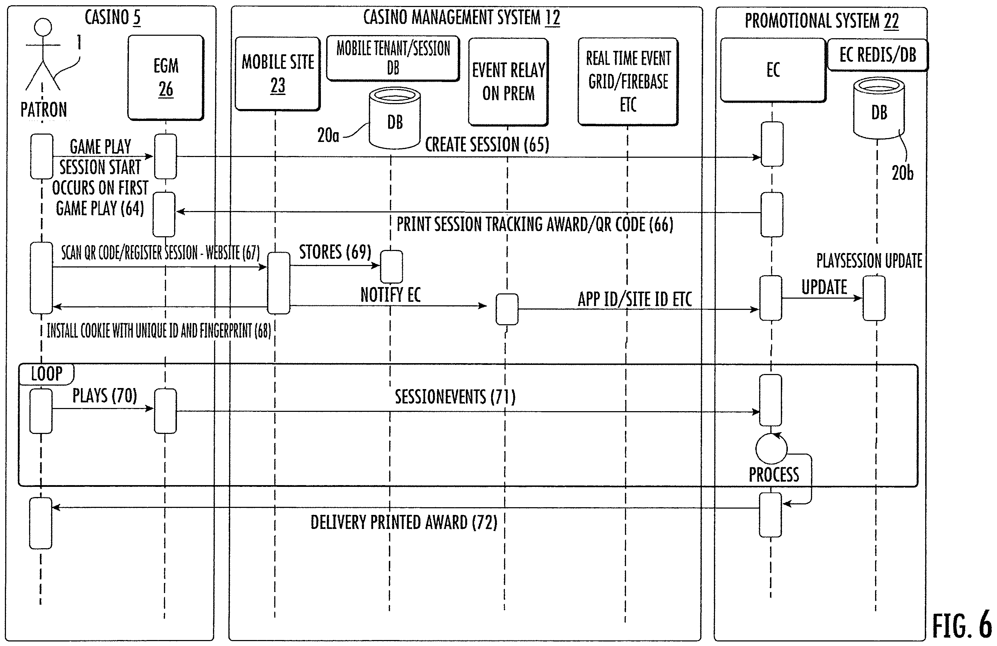

Figure 6 shows a flow diagram of such an example embodiment of the present invention. Figure 6 assumes a session is started with an uncarded player session when a player 1 starts playing an EGM 26 at casino 5. However, the same flow can be used to obtain data on a carded player.

A player 1 begins play by buying in at the EGM 26, whether by using cash or by the insertion of a TITO voucher 33, 33' obtained from the casino cage or kiosk 36, or from a prior game session. First, game play occurs, initiating a session (64). The start time and other attributes of the session are recorded by the casino management system 12 (e.g., in session database 20a). The session information is also communicated (65) to the promotional system 22 and stored in a database 20b. At some stage (whether during game play or at the end of a session), the promotional system 22 triggers the printing (66) of a voucher 33' with an encoded fingerprint (e.g., a QR code 45), which is printed at the EGM 26 and communicates to the player 1 that he or she is eligible for additional rewards, with instructions to scan the accompanying QR code 45 to participate.

When the QR code 45 is scanned (67), the player 1 is taken to a pre-defined website (e.g., website 50, website 23 of the casino management system 12, or other website as described above) that will validate the fingerprint via the URL query parameters and if valid will ask for player information. The player 1 can provide that information at this time or "opt-out", but to collect certain rewards the player 1 will need to eventually provide some personal information. A cookie or other embedded data containing a "device identifying" fingerprint will be installed (68) on the users' devices. This happens regardless of whether the player 1 provides their personal information at this time. The cookie and or embedded fingerprint (via local storage on the user device (e.g., smartphone 42 , tablet computer 44, or other internet enabled device) acts as a proxy for identifiable information.

The fingerprint is simultaneously stored (69) with the casino management system 12 and the promotional system 22 so that the device/user information can be looked up, collated, and aggregated upon further visits. The fingerprint/device/user information is now associated with game play on the active EGM 26 until the session is ended.

The player 1 continues to play (70) until he or she ends the current game play session, by, for example, cashing out or letting the credit meter fall below a threshold. The casino management system 12 and promotional system 22 will detect this and record this information. Events and session data are recorded (71) up until the session is detected as "ended", at which time the promotional system may deliver a printed award (72) (e.g., in the form of a voucher or coupon as discussed above).

The flow process described above can be configured to repeat as many times as possible until the player 1 achieves the desired threshold of play as configured by casino/system 12. Session information may also be carried over to a different EGM 26 using the TITO voucher 33, 33' from the prior EGM 26, and the systems 12, 22 will aggregate the prior game play information with the current game play information. This can be repeated across multiple EGMs 26 as long as the TITO voucher 33, 33' from the immediately prior EGM 26 is inserted into another EGM 26.

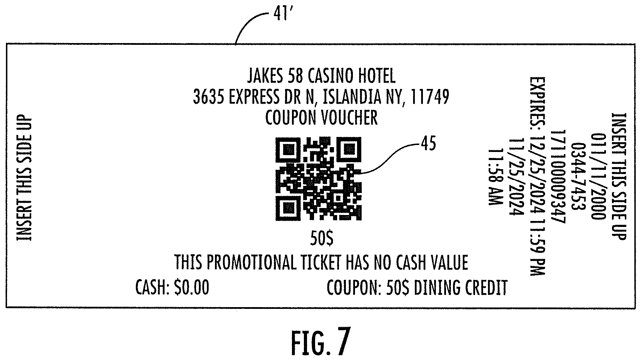

Once the player 1 achieves or crosses the play threshold the casino 5 sets forth for a particular intended reward, an award coupon is delivered to the player 1. Figure 7 shows an example embodiment of such a reward coupon 41'. This coupon 41' could also include a QR code 45 (with encoded fingerprint) directing them to the same (or other) website 50 where the player 1 can choose their reward and or be required to provide their identifying user information to claim the reward. The coupon 41' could also just represent the reward itself as a free meal, free play, discount hotel stay, or the like, redeemable by the physical coupon alone.

In a further example embodiment of the present invention, a downloadable mobile app 49 for a smartphone 42 is provided. As discussed above, a voucher/ticket/slip 33' may be dispensed via the TITO Printer 32 with a unique fingerprint and a URL encoded into a standard QR code 45. This printed voucher 33' can then be scanned and interpreted by any smartphone 42 or device with a camera capable of reading QR codes 45. Upon scanning by the player's smartphone 42, the player 1 is then directed to a website 50 with the fingerprint information embedded within the URL via query string attributes.

With the session information encoded within the URL, that information can be extracted for storage and processing by the web site. As above, it is important to note that the session information does not contain any PID information. The only information it will contain is non personal identifying information about the session - a fingerprint - and information about the mobile app, which is used by the smartphone's OS to identify an app that is needed and prompt the player to download it. When scanned by the player's smartphone 42 the player will be prompted to download a mobile app 49 (unless already installed).

If the mobile app 49 isn't already installed on the player's smartphone 42 the player 1 will be prompted to download the app 49 upon scanning the QR code 45. If the player 1 chooses to install the mobile app 49, the mobile app 49 upon installation will create a unique ID and a digital fingerprint that uniquely identifies that installation and acts as a proxy for the player 1 and their PID. This ID will be used to anonymously link the player 1 and their smartphone 42 to the fingerprint generated and printed by the TITO printer 32 during their sessions. This will allow the casino 5 to reward these players 1 for their game play despite them still being "uncarded" and remaining anonymous, as no PID is required to be shared with the casino 5 unless the player 1 chooses to do so.

Once the app 49 is installed the player 1 merely must scan any of the printed media (e.g., voucher 33' or coupons 41, 41') generated in-session. This allows the casino 5 two methods of reaching the player 1. The first, is, as described earlier, to scan a printed slip/ticket in-session to allow the player 1 to track and receive credit for any play thereafter during that session.

The second option is for the casino 5 to provide in-session pointing that the player 1 can scan and save into the player's digital wallet 47. This further detethers the player 1 from the EGM 26 and allows them to scan the rewards at some time post session so as not to interrupt game play.

Likewise, if the player 1 already has the mobile app 49, upon scanning of the QR code 45, the mobile app 49 will log and associate the app's unique ID/fingerprint with the session fingerprint or store the printed promotion in the player's digital wallet 47.

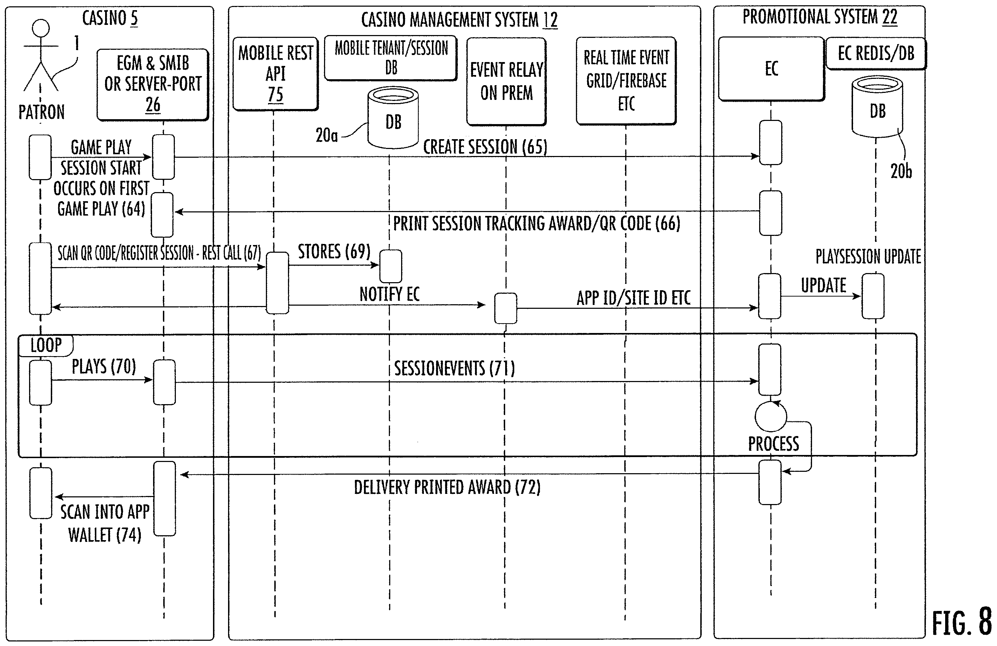

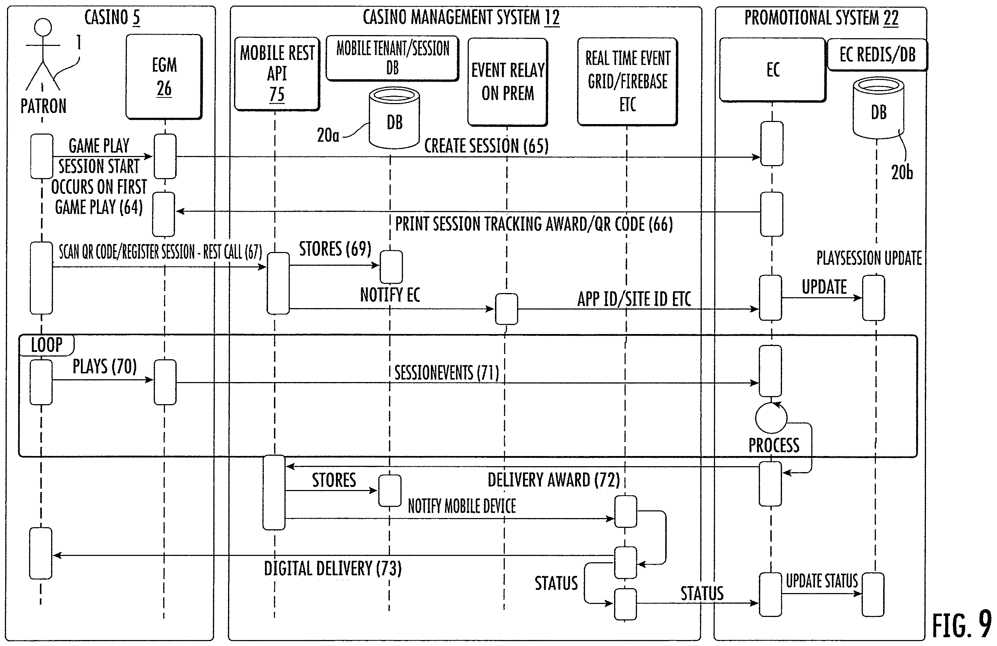

Figures 8 and 9 show flow diagrams of such an example embodiment of the present invention. In Figures 8 and 9, it is assumed the player 1 has installed the mobile app 49 on his or her smartphone 42. Doing so creates a digital fingerprint unique for that smartphone 42 which will allow the device to be linked to any game play described herein.

As with the Figure 6 embodiment described above, a player 1 begins a game play session (64) play by buying in at the EGM 26 (using cash) or the insertion of a TITO voucher obtained from the casino cage or kiosk 36 or prior game session. First, game play occurs initiating a session (65). The start time and other attributes of the session are recorded by the casino management system 12. The session information is also communicated to the promotional system 22 and stored in a database 20b. At some stage (whether during game play or at the end of a session), the promotional system 22 triggers the printing (66) of a voucher 33' with an encoded fingerprint (e.g., embodied in a QR code 45), which is printed at the EGM 26 and communicates to the player 1 that he or she is eligible for additional rewards, with instructions to scan the accompanying QR code 45 to participate.

Rather than being directed to a website as with the Figure 6 embodiment, in the embodiment described in Figures 8 and 9, when the player 1 scans (67) the QR code 45 a rewards app 49 (e.g., the Epic Player app provided by the Assignee of the present invention) is launched on the player's smartphone 42 (or other Internet enabled device) via the mobile REST API 75. The app 49 decodes and stores the fingerprint and associates the smartphone 42 and player 1 with the game play on that EGM 26.

The app 49 will then communicate with the casino management system 12 backend as well as the promotional system 22 hosting the app 49, associating the device/phone/user with game play until the session is ended. The player 1 continues to play until he or she ends the current game play session, by, for example, cashing out or letting the credit meter fall below a threshold. The casino management system 12 and promotional system 22 will detect this and record this information. Events and session data are recorded (71) up until the session is detected as "ended".

The process above can be configured to repeat as many times as possible until the player 1 achieves the desired threshold of play configured by casino/system. Session information may also be carried over to a different EGM 26 using the TITO voucher 33, 33' from the prior EGM 26, and the systems 12, 22 will aggregate the prior game play information with the current game play information. This can be repeated across multiple EGMs 26 as long as the TITO voucher from the immediately prior EGM 26 is inserted into another EGM 26.

Once the player 1 achieves or crosses the play threshold the casino 5 sets forth for a particular intended reward, an award is delivered (72, 73) to the player 1. The award can come in the form of a physical promotional coupon/voucher 41, 41' printed at the EGM 26 (as shown in Figure 8). The printed award can then be scanned (74) into the digital wallet 47. Alternatively, the reward can be delivered digitally (73) directly to the player's smartphone 42 directly through the app 49 (as shown in Figure 9).

As with the Figure 6 embodiment, the physical coupon 41' could also include a QR code 45 (with encoded fingerprint) directing the player 1 to a website where the player 1 can choose their reward and or be required to provide their identifying user information to claim the reward. The coupon 41, 41' could also just present the reward itself as a free meal, free play, discount hotel stay, or the like, redeemable by the physical coupon alone.

In all embodiments, the casino then has the ability to use this anonymous data for its analytics and in order to better target players 1 with offers on return visit to the site or in game incentives via the TITO printer 32. This is done to provide rewards to encourage these anonymous players to provide demographic information and additional patronage.

Rewards can be generated based on various thresholds for one or more of dollar amounts (won or lost), time played per session, number of sessions played, aggregate wagers, type or number of games played, or the like. Rewards can be provided to the player at the end of a session or after multiple sessions. Rewards can also be generated in-session (e.g., by printing a voucher during game play with indicia indicating the reward). Redemption of a reward may be tied to the player registering with the casino in some fashion, for example by providing their personal information to register for a player's card or to sign up for a casino rewards account (whether via a dedicated website or smartphone application).

**In** summary, the present invention enables a casino operator to track an uncarded player over multiple sessions and reward them based on their cumulative play. The reward can be provided via a promotional voucher which drives them to a website or mobile app. The rewards may be conditional on the player registering for a card with the casino and/or joining the casino player's club, or otherwise providing their personal identifying information. Thus, the present invention allows a casino to derive an uncarded player's "true value" more accurately and to incentivize uncarded players to register with the casino and become a carded player. The systems, apparatus, and methods of the claimed invention allow for tracking uncarded players and rewarding them across multiple sessions and modalities (physical voucher, digitally). It's important to note that although the primary focus of the present invention is uncarded players, this same technology can be applied to reward carded players.

It should now be appreciated that the present invention provides advantageous methods and apparatus for tracking and rewarding uncarded casino patrons and encouraging uncarded patrons to become carded players.

Although the invention has been described in connection with various illustrated embodiments, numerous modifications and adaptations may be made thereto without departing from the spirit and scope of the invention as set forth in the claims.

## Claims

1. A player identification and tracking system for identifying, tracking and rewarding uncarded players utilizing ticket vouchers, comprising:
at least one electronic gaming machine comprising a TITO printer;
a casino management system in communication with the electronic gaming machine;
a promotional system in communication with the casino management system;
wherein:
the electronic gaming machine communicates game play information for each game play session of a player to at least one of the casino management system and the promotional system;
a reward for the player is generated by one of the casino management system and the promotional system at predetermined thresholds of game play;
reward indicia for the reward is embodied in a voucher printed at the electronic gaming machine; and
a unique voucher number is assigned to the voucher.

2. The player identification and tracking system in accordance with claim 1, wherein the voucher is generated each time the player qualifies for the reward.

3. The player identification and tracking system in accordance with claim 1 or 2, wherein the unique voucher number comprises a session fingerprint for a current or just completed game play session, in particular
wherein:
the electronic gaming machine further comprises one or more slot machine interface boards (SMIB), enabling communication with at least one of the casino management system and the promotional system; and
the unique voucher number is communicated to at least one of the casino management system and the promotional system.

4. The player identification and tracking system in accordance with claim 3, wherein the unique voucher number is made available to at least one of the casino management system and the promotional system when the player at least one of adds additional game play credits to the electronic gaming machine, ends the game play session by cashing out the game play credits, ends the game play session by playing the game play credits to zero on the electronic gaming machine, and initiates a further game play session via the electronic gaming machine or a further electronic gaming machine.

5. The player identification and tracking system in accordance with claim 3 or 4, wherein:
the game play information comprises game play session attributes; and
the game play session attributes are communicated to at least one of the casino management system and the promotional system in association with the unique voucher number, in particular
wherein at least one of (i) the game play session attributes comprise one or more of electronic gaming machine identifier, electronic gaming machine serial number, internal session identifier, timestamp, session start and end times, session duration, location, amount won, amount lost, game identifier, number of games or sessions played, amount wagered, and time played per game or session, and (ii) the session fingerprint comprises at least a portion of the game play session attributes.

6. The player identification and tracking system in accordance with claim 5, wherein:
the printed voucher comprises a QR code;
the session fingerprint and a URL are encoded into the QR code; and
the session fingerprint acts as a proxy for the player and the player's personal identification information for use by at least one of the casino management system and the promotional system for identifying the player.

7. The player identification and tracking system in accordance with claim 6, wherein at least one of the reward indicia or the QR code associated with the reward is scannable into a player's digital wallet for storage and later use.

8. The player identification and tracking system in accordance with claim 6 or 7, wherein:
scanning of the QR code by a player's mobile electronic device renders a website identified by the URL, the website being adapted to extract the session information from the session fingerprint; and
based on the session information, the website generates the award for redemption by the player, in particular
wherein:
a website host for the website comprises one of the casino management system and the promotional system; and
the website host generates a second fingerprint and a unique identifier based on the extracted session data for storage in the form of a cookie;
the cookie is linked to the player's mobile electronic device;
the cookie acts a proxy for the player's personal identification information, enabling further game play sessions to be linked to and associated with the cookie.

9. The player identification and tracking system in accordance with claim 8, wherein the reward is redeemable upon one of:
the player providing personal identification information to at least one of the casino management system and the promotional system; and
the player registering for a casino player card.

10. The player identification and tracking system in accordance with any one of claims 6 to 9, wherein:
scanning of the QR code by a player's mobile electronic device renders a mobile app identified by the URL for downloading onto the player's mobile electronic device; and
the mobile app, once downloaded, generates a unique identifier based on extracted session data that acts a proxy for the player's personal identification information, enabling further game play sessions to be linked to and associated with the downloaded mobile app, in particular
wherein:
subsequent to the downloading of the mobile app, further session information is automatically communicated to one of the casino management system and the promotional system; and
further rewards are provided to the player based on the further session information, in particular
wherein the reward indicia for the rewards and the further rewards are automatically communicated to and stored in a player's digital wallet.

11. The player identification and tracking system in accordance with claim 10, wherein the reward is redeemable upon one of:
the player providing personal identification information to at least one of the casino management system and the promotional system; and
the player registering for a casino player card.

12. The player identification and tracking system in accordance with any one of claims 6 to 11, wherein the QR code or associated reward indicia is scanned at a redemption location to obtain the reward.

13. The player identification and tracking system in accordance with any one of claims 1 to 12, wherein the game play information is accumulated over multiple game play sessions and/or multiple electronic gaming machines via use of the voucher.

14. The player identification and tracking system in accordance with any one of claims 1 to 13, wherein:
the voucher is printed at least one of periodically during the game play session based on the predetermined thresholds and at an end of the game play session; and
the predetermined thresholds are based on one or more of time of play, amount won, amount lost, game play sessions played, aggregate wagers, and type or number of games played.

15. The player identification and tracking system in accordance with any one of claims 1 to 14, wherein:
the reward is redeemable on presentation of the voucher at a redemption location; and
the redemption location comprises one or more of the casino gaming machine, a restaurant, a hotel, a cash dispenser, an online store, a rental car agency, a retail establishment, a gift shop, and a website, in particular
wherein the reward comprises one or more of physical gifts from online stores or brick and mortar stores, game play credits for redemption in a casino gaming machine, and discount coupons for meals, hotel stays, travel, events, or experiences.

16. The player identification and tracking system in accordance with any one of claims 1 to 15, wherein:
at least one of the casino management system and the promotional system collects the game play information from multiple game play sessions of the player over time;
the collected game play information is analyzed to at least one of: provide targeted rewards to the player; provide player incentives for further game play; and encourage the player to register for a casino player card, in particular
wherein the session information from multiple game play sessions and players is analyzed.

17. A method for identifying, tracking and rewarding uncarded players utilizing ticket vouchers, comprising:
providing at least one electronic gaming machine comprising a **TITO** printer;
enabling communications between the electronic gaming machine, a casino management system, and a promotional system;
communicating game play information for each game play session of a player to at least one of the casino management system and the promotional system;
initiating communication of a reward for the player from at least one of the casino management system and the promotional system at predetermined thresholds of game play;
printing reward indicia for the reward on a voucher printed at the electronic gaming machine; and
assigning a unique voucher number to the voucher.

18. The method of claim 17 being performed on the system of any one of claims 1 to 16.
